# EUROPÄISCHE PATENTSCHRIFT

(11) **EP 1 391 472 B1**
(45) Veröffentlichungstag und Bekanntmachung des Hinweises auf die Patenterteilung: **08.11.2006**
(21) Anmeldenummer: 03018087.1
(22) Anmeldetag: 08.08.2003
(51) Int. Cl.: C08G 18/08, C08G 18/10, C08G 18/38

(54) **Kontinuierliche Herstellung von thermoplastisch verarbeitbaren Polyurethanen**
Continuous preparation of thermoplastic polyurethanes
Préparation continue de polyuréthanes thermoplastiques

(30) Priorität: 21.08.2002 DE 10238112
(43) Veröffentlichungstag der Anmeldung: 25.02.2004
(73) Patentinhaber: Bayer MaterialScience AG, 51368 Leverkusen (DE)
(72) Erfinder: Bräuer, Wolfgang, Dr., 51375 Leverkusen (DE); Heidingsfeld, Herbert, 50226 Frechen (DE); Peerlings, Henricus, Dr., 42699 Solingen (DE); Trabert, Ludwig, Dr., 47802 Krefeld (DE)

(56) Entgegenhaltungen:
- EP-A- 0 122 894
- EP-A- 0 571 828
- US-A- 4 602 079

## Beschreibung

Die Erfindung betrifft ein mehrstufiges Verfahren zur kontinuierlichen Herstellung von thermoplastisch verarbeitbaren Polyurethanen.

Thermoplastische Polyurethan-Elastomere (TPU) sind seit langem bekannt. Sie sind aufgrund der Kombination hochwertiger mechanischer Eigenschaften mit den bekannten Vorteilen der kostengünstigen thermoplastischen Verarbeitbarkeit von technischer Bedeutung. Durch die Verwendung unterschiedlicher chemischer Aufbaukomponenten lässt sich eine große Variationsbreite mechanischer Eigenschaften erzielen. Eine Übersicht über TPUs, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPUs werden aus linearen Polyolen, meist Polyester- oder Polyether-Polyolen, organischen Diisocyanaten und kurzkettigen Diolen (Kettenverlängerern) aufgebaut. Über die Polyole lassen sich eine Vielfalt von Eigenschaftskombinationen gezielt einstellen. Zur Beschleunigung der Bildungsreaktion können zusätzlich Katalysatoren zugesetzt werden. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte im Bereich von 70 Shore A bis 75 Shore D.

Der Aufbau der thermoplastisch verarbeitbaren Polyurethanelastomeren kann entweder schrittweise (Prepolymerdosierverfahren) oder durch die gleichzeitige Reaktion aller Komponenten in einer Stufe (one-shot-Dosierverfahren) erfolgen.

Die TPUs können kontinuierlich oder diskontinuierlich hergestellt werden. Die bekanntesten technischen Herstellverfahren sind das Bandverfahren (GB-A 1 057 018) und das Extruderverfahren (DE-A 19 64 834, DE-A 23 02 564 und DE-A 20 59 570). Beim Extruderverfahren werden die Ausgangsstoffe in einen Schneckenreaktor dosiert, dort polyaddiert und in eine gleichmäßige Granulatform überführt. Das Extruderverfahren ist vergleichsweise einfach, hat aber den Nachteil, dass die Homogenität der so hergestellten Produkte aufgrund des gleichzeitigen Ablaufs von Mischen und Reaktion für viele Anwendungen nicht ausreichend ist. Zusätzlich ist aufgrund des begrenzten Reaktionsraumes und der eingeschränkten Dosiermöglichkeiten die Variabilität in der gezielten Nutzung verschiedener Polyole begrenzt.

Eine Verbesserung hinsichtlich einer gezielten und kontrollierten Herstellung von TPUs mit verbessertem Verarbeitungsverhalten brachte der in EP-A 0 571 828 beschriebene Zweistufenprozeß, bei dem aus einem Polyol und einem Diisocyanat gezielt das Prepolymer in einem Rohrreaktor vor dem Extruder aufgebaut wird. Im angeschlossenen Extruder wird die TPU-Bildung unter Zusatz des Kettenverlängerers abgeschlossen. Aufgrund der in jeder Verfahrensstufe optimalen Bedingungen können so TPUs gezielt und kontrolliert hergestellt werden.

Für viele Anwendungen reicht es aber nicht aus, nur ein Polyol für das TPU zu verwenden. Es lassen sich besondere TPU-Eigenschaftskombinationen durch die gleichzeitige Verwendung verschiedener Polyole erzielen. Als Beispiel seien die Kombination von Polyesterpolyolen und Polyetherpolyolen und die Vorteile, die sich daraus ergeben, genannt. Durch Zusatz von besonderen einbaufähigen phosphorhaltigen Polyolen kann die Flammwidrigkeit verbessert werden, ohne dass andere Eigenschaften negativ beeinflusst werden.

Setzt man die teilweise chemisch sehr verschiedenen Polyole gleichzeitig (Prepolymer-Verfahren) oder sogar zusammen mit dem Kettenverlängerer (one shot-Verfahren) in einem kontinuierlichen Herstellprozeß mit dem Diisocyanat um, werden wahrscheinlich aufgrund der nicht mehr optimalen Reaktionsbedingungen für alle Einsatzstoffe klebrige, schlecht verarbeitbare TPU erhalten.

Aufgabe war es daher, ein wirtschaftlich günstiges, kontinuierliches Verfahren zur Verfügung zu stellen, mit dem es möglich ist, gut verarbeitbare, homogene nicht klebrige TPUs technisch einfach herzustellen.

Diese Aufgabe konnte überraschend durch ein kontinuierliches mehrstufiges Herstellverfahren gelöst werden.

Gegenstand der Erfindung ist daher ein mehrstufiges Verfahren zur kontinuierlichen Herstellung thermoplastisch verarbeitbarer Polyurethanelastomere (TPU) mit Zugfestigkeiten von >30 MPa (gemessen nach EN ISO 527-3), welches dadurch gekennzeichnet ist, dass
a) ein Prepolymer I durch Umsetzung von
   A) wenigstens einem organischen Diisocyanat mit
   B) einem Polyol 1 mit im Mittel mindestens 1,8 und höchstens 3,0 zerewitinoffaktiven Wasserstoffatomen und einem zahlenmittleren Molekulargewicht M̅ₙ von 450 bis 10000
   hergestellt wird,
b) das unter a) hergestellte Prepolymer I mit
   C) einem Polyol 2, das von Polyol 1 verschieden ist , mit im Mittel mindestens 1,8 und höchstens 3,0 zerewitinoffaktiven Wasserstoffatomen und einem zahlenmittleren Molekulargewicht M̅ₙ von 60 bis 10000 zu einem Prepolymer II umgesetzt wird , wobei unter Hinzuziehung der Reaktionskomponenten (A), (B) und (C) ein Äquivalenzverhältnis von NCO-Gruppen zur Summe der NCO-reaktiven Gruppen von 1,2:1 bis 10:1 eingestellt wird,
c) das unter b) hergestellte Prepolymer II mit
   D) mindestens einem niedermolekularen Polyol oder Polyamin mit im Mittel mindestens 1,8 und höchstens 3,0 zerewitinoffaktiven Wasserstoffatomen und einem zahlenmittleren Molekulargewicht M̅ₙ von 60 bis 400 als Kettenverlängerer in einem mit hoher Scherenergie arbeitenden Hochviskosreaktor vollständig umgesetzt wird,
wobei die Schritte a) bis c) gegebenenfalls in Gegenwart von Katalysatoren (F) und gegebenenfalls unter Zugabe von 0 bis 20 Gew.-% , bezogen auf die Gesamtmenge TPU , weiterer Hilfs-und Zusatzstoffe E) durchgeführt werden, wobei insgesamt unter Hinzuziehung sämtlicher Reaktionskomponenten der Stufen a) bis c) ein Äquivalenzverhältnis von NCO-Gruppen zur Summe der NCO-reaktiven Gruppen von 0,9:1 bis 1,2:1 eingestellt wird.

Als organische Diisocyanate (A) kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und aromatische Diisocyanate, wie 2,4-Toluylendiisocyanat, Gemische aus 2,4- und 2,6-Toluylendiisocyanat, 4,4'-Diphenylmethandiisocyanat, 2,4'- Diphenylmethandiisocyanat und 2,2'-Diphenylmethandiisocyanat, Gemische aus 2,4'- Diphenylmethandiisocyanat und 4,4'-Diphenylmethandiisocyanat, urethanmodifizierte flüssige 4,4'-Diphenylmethandiisocyanate und/oder 2,4'-Diphenylmethandiisocyanate, 4,4'-Diisocyanatodiphenyl-ethan-(1,2) und 1,5-Naphthylendiisocyanat. Vorzugsweise verwendet werden Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 % (berechnet auf Gesamt-Diisocyanat), aber höchstens soviel eines Polyisocyanates, dass ein thermoplastisch verarbeitbares Produkt entsteht, verwendet werden. Beispiele sind Triphenylmethan-4,4',4"-triisocyanat und Polyphenylpolymethylen-polyisocyanate.

Bei den Komponenten B) handelt es sich bevorzugt um Polyester-, Polyether-, Polycarbonatpolyole oder um Polyole, die Stickstoff-, Phosphor-, Schwefel- und/oder Siliziumatome enthalten, oder um Gemische aus diesen. Unter den Polyolen mit Heteroatomen sind besonders bevorzugt Phosphat-, Phosphonat- und Phosphinoxidhaltige Polyole.

Als Komponente B) (Polyol 1) werden bevorzugt lineare hydroxylterminierte Polyole mit im Mittel 1,8 bis 3,0 zerewitinoffaktiven Wasserstoffatomen pro Molekül, bevorzugt 1,8 bis 2,2 zerewitinoffaktiven Wasserstoffatomen pro Molekül, und mit einem Molekulargewicht von 450 bis 10000 g/mol eingesetzt. Produktionsbedingt enthalten diese oft kleine Mengen an nichtlinearen Verbindungen. Häufig spricht man daher auch von "im wesentlichen linearen Polyolen".

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.% bezogen auf die bifunktionellen Polyether eingesetzt werden, jedoch höchstens in solcher Menge, dass ein thermoplastisch verarbeitbares Produkt entsteht. Die im wesentlichen linearen Polyether-Diole haben vorzugsweise Molekulargewichte von 450 bis 5000 g/mol. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol und/oder 1,6-Hexandiol, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Poly-caprolactone. Die Polyester-Diole besitzen bevorzugt Molekulargewichte von 450 bis 5000 g/mol und können einzeln oder in Form von Mischungen untereinander zur Anwendung kommen.

Als Komponente C) (Polyol 2) werden ebenfalls lineare hydroxylterminierte Polyole mit im Mittel 1,8 bis 3,0 zerewitinoff-aktiven Wasserstoffatomen pro Molekül und mit einem Molekulargewicht von 60 bis 10000 g/mol eingesetzt. Es können die vorgenannten Verbindungen, die als Komponente B) eingesetzt werden, verwendet werden, wobei das Polyol 2 jedoch von Polyol 1 unerschiedlich ist.

Besonders bevorzugt als Polyol(2) sind Polyester-, Polyether-, Polycarbonat-Polyole oder Gemische aus diesen mit einem Molekulargewicht von 100 bis 5000 g/ml und mit im Mittel 1,8 bis 2,2 zerewitinoff-aktiven Wasserstoffatomen pro Molekül.

Es können vorzugsweise auch spezielle Polyole mit Heteroatomen, wie z.B. Stickstoff-, Phosphor-, Silicium- oder Schwefelhaltige Polyole, eingesetzt werden. Besonders bevorzugt sind Phosphat-, Phosphonat- oder Phosphinoxidhaltige Polyole mit einem Molekulargewicht von 100 bis 5000 g/mol und mit im Mittel 1,8 bis 2,2 zerewitinoff-aktiven Wasserstoffatomen pro Molekül.

Bevorzugt werden als Phosphat Verbindungen der allgemeinen Formel (I) eingesetzt: 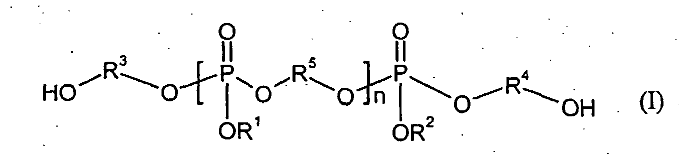 mit
- R¹, R² = H,: verzweigte oder unverzweigte Alkylreste mit 1 bis 24 C-Atomen, substituierte oder nicht substituierte Arylreste mit 6 bis 20 C-Atomen, substituierte oder nicht substituierte Aralkylreste mit 6 bis 30 C-Atomen, substituierte oder nicht-substituierte Alkarylreste mit 6 bis 30 C-Atomen, wobei R¹ und R² gleich oder verschieden sein können,
- R³, R⁴, R⁵: = verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei R³, R⁴, R⁵ gleich oder verschieden sein können,
- n =: 0 bis 100

Bevorzugt werden als Phosphonat Verbindungen der allgemeinen Formel (II) eingesetzt: 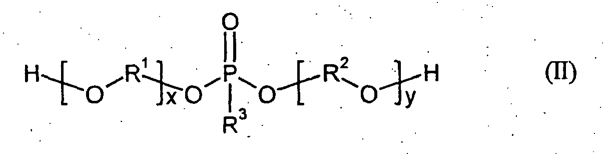 mit
- R¹, R²=: verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei R¹ und R² gleich oder verschieden sein können,
- R³ =: H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 G-Atomen, substituierte oder nicht-substituierte Alkarylreste mit 6 bis 30 C-Atomen,
- x, y =: 1 bis 50, bevorzugt 2 bis 40.

Ebenfalls als Phosphonat können Verbindungen der allgemeinen Formel (III) bevorzugt zum Einsatz kommen: 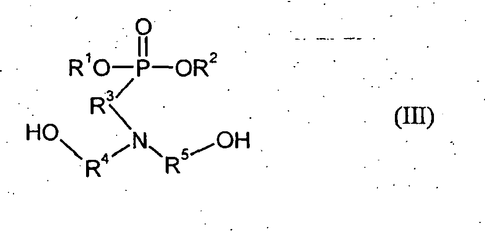 mit
- R¹, R² =: H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen, wobei R¹ und R² gleich oder verschieden sein können,
- R³ =: verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen.
- R⁴, R⁵ =: verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei R⁴ und R⁵ gleich oder verschieden sein können.

Bevorzugt werden als Phosphinoxid Verbindungen der allgemeinen Formel (IV) eingesetzt: 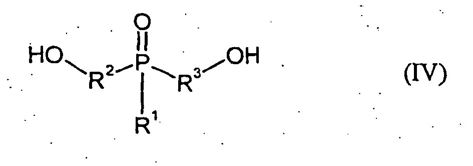 mit
- R¹ =: H, verzweigte oder unverzweigte Alkylreste mit 1 bis 24 C-Atomen, substituierte oder nicht-substituierte Arylreste mit 6 bis 20 C-Atomen, substituierte oder nicht-substituierte Aralkylreste mit 6 bis 30 C-Atomen, substituierte oder nicht-substituierte Alkarylreste mit 6 bis 30 C-Atomen,
- R², R³=: verzweigte oder unverzweigte Alkylenreste mit 1 bis 24 C-Atomen, substituierte oder nicht-substituierte Arylenreste mit 6 bis 20 C-Atomen, substituierte oder nicht-substituierte Aralkylenreste mit 6 bis 30 C-Atomen, substituierte oder nicht-substituierte Alkarylenreste mit 6 bis 30 C-Atomen, wobei R² und R³ gleich oder verschieden sein können.

Als Kettenverlängerer D) werden niedermolekulare Polyole oder Polyamine mit im Mittel 1,8 bis 3,0 zerewitinoff-aktiven Wasserstoffatomen pro Molekül und einem Molekulargewicht von 60 bis 400 g/mol eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoff-atomen, wie z.B. Terephthalsäure-bis-ethylenglykol oder Terephthalsäure-bis-1,4-butandiol, Hydroxyalkylenether des Hydrochinons, wie z.B. 1,4-Di(β-hydroxyethyl)-hydrochinon, ethoxylierte Bisphenole, wie z.B. 1,4-Di(β-hydroxyethyl)-bisphenol A, (cyclo)aliphatische Diamine, wie z.B. Isophorondiamin, Ethylendiamin, 1,2- Propylen-diamin, 1,3-Propylen-diamin, N-Methyl-propylen-1,3-diamin, N,N'-Dimethyl-ethylendiamin und aromatische Diamine, wie z.B. 2,4-Toluylen-diamin und 2,6-Toluylen-diamin, 3,5-Diethyl-2,4-toluylen-diamin und/oder 3,5-Diethyl -2,6-toluylen-diamin und primäre mono-, di-, tri- und/oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden. Das niedermolekulare Polyol (D) ist zu Polyol 2 unterschiedlich.

Weiterhin können in geringen Mengen auch übliche monofunktionelle Verbindungen, z. B. als Kettenabbrecher oder Entformungshilfen, eingesetzt werden. Beispielhaft genannt seien Alkohole wie Oktanol und Stearylalkohol oder Amine wie Butylamin und Stearylamin.

Zur Herstellung der TPUs können die Aufbaukomponenten, gegebenenfalls in Gegenwart von Katalysatoren, Hilfsmitteln und/oder Zusatzstoffen vorzugsweise in solchen Mengen zur Reaktion gebracht werden, dass das Äquivalenzverhältnis von NCO-Gruppen aus A) zur Summe der NCO-reaktiven Gruppen, insbesondere der OH- (bzw. NH-)Gruppen der niedermolekularen Verbindungen D) und der Polyole B) und C), 0,9:1,0 bis 1,2:1,0, vorzugsweise 0,95:1,0 bis 1,10:1,0 beträgt.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylamino-ethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und/oder Zinnverbindungen.

Neben den TPU-Komponenten und den Katalysatoren können auch Hilfsmittel und/oder Zusatzstoffe (E) bis zu 20 Gew.%, bezogen auf die Gesamtmenge TPU, zugesetzt werden. Sie können in einer der TPU-Komponenten, vorzugsweise in der Komponente B), gelöst werden oder auch ggf. nach erfolgter Reaktion in einem nachgeschalteten Mischaggregat, wie z.B. einem Extruder, zudosiert werden.

Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Ebenfalls können andere Elastomere wie Kautschuk, Ethylen/Vinylacetatcopolymere, Styrol/Butadiencopolymere sowie andere TPU's verwendet werden. Weiterhin zur Einarbeitung geeignet sind handelsübliche Weichmacher wie Phosphate, Phthalate, Adipate, Sebacate und Alkylsulfonsäureester.

Das erfindungsgemäße Herstellverfahren wird vorzugsweise wie folgt ausgeführt.

Die Komponenten der Stufe a) werden bei Temperaturen oberhalb ihres Schmelzpunktes, bevorzugt bei Temperaturen von 50 bis 220°C, kontinuierlich vermischt und zum Prepolymer I umgesetzt. Diese Stufe wird vorzugsweise in einem Mischaggregat mit hoher Scherenergie-durchgeführt. Beispielsweise können ein Mischkopf bzw. ein hochtouriger Rohrmischer, eine Düse oder ein Statikmischer verwendet werden. Einsetzbare Statikmischer sind in Chem.-Ing. Techn. 52, Nr. 4, Seite. 285 bis 291 sowie in "Mischen von Kunststoff und Kautschukprodukten", VDI-Verlag, Düsseldorf 1993, beschrieben. Beispielhaft seien SMX-Statikmischer der Firma Sulzer erwähnt.

In einer anderen Ausführungsform kann für die Reaktion auch ein Rohr als Reaktor verwendet werden.

Die Prepolymerreaktion der Stufe a) sollte im wesentlichen zum vollständigen Umsatz (bezogen auf das Polyol 1) gebracht werden. Vorzugsweise sollten in dieser Stufe mehr als 85 Mol-% des eingesetzten Polyols umgesetzt werden. Die Reaktiontemperaturen sollten oberhalb von 100°C liegen, bevorzugt zwischen 120°C und 250°C. Für den kontinuierlich ablaufenden Prozess wird der Reaktor in seinem Volumen so bemessen, dass im Zusammenspiel mit der Reaktionstemperatur und dem Durchsatz der geforderte Umsatz gewährleistet ist.

Bevorzugt wird in der Stufe b) das Polyol 2, welches auf oberhalb seines Schmelzpunktes vorgeheizt ist, mit hoher Scherenergie in das Prepolymer I kontinuierlich eingemischt und zur Reaktion zum Prepolymer II gebracht. Auch für diese Stufe können die oben erwähnten Reaktoren verwendet werden. Bevorzugt wird für diese Stufe ein von Stufe a) getrennter Reaktor benutzt.

Auch für diese Stufe b) wird der Reaktor in seinem Volumen so bemessen, dass im Zusammenspiel mit der Reaktionstemperatur und dem Durchsatz ein Umsatz von >85 Mol-% des eingesetzten Polyols 2 gewährleistet ist.

In einer besonderen Ausführungsform kann diese Stufe auch in einem ersten Teil eines Mehrwellenextruders (z.B. ein Zweiwellenkneter ZSK) durchgeführt werden.

Unter Hinzuziehung aller Reaktionskomponenten der Stufen a) und b) wird vorzugsweise ein Äquivalenzverhältnis von NCO-Gruppen zur Summe der NCO-reaktiven Gruppen von 1,2:1 bis 10:1 eingestellt.

In der Stufe c) wird das Prepolymer II bevorzugt kontinuierlich mit dem niedermolekularen Polyol bzw. Polyamin als Kettenverlängerer vermischt und in einem Hochviskosreaktor zum TPU umgesetzt.

Die Einmischung des Kettenverlängerers erfolgt vorzugsweise in einem mit hoher Scherenergie arbeitenden Mischaggregat. Beispielhaft seien ein Mischkopf, ein Statikmischer, eine Düse oder ein Mehrwellenextruder genannt. Bevorzugt werden die Vermischung und die Reaktion der Komponenten dieser Stufe in einem Mehrwellenextruder (z.B. in einem Zweiwellenkneter ZSK) nach Stufe b) durchgeführt.

Die Reaktionsstufe c) wird vorzugsweise in einem von a) und b) verschiedenen Reaktortyp durchgeführt.

Die Temperaturen der Extrudergehäuse werden so gewählt, dass die Reaktionskomponenten zum vollständigen Umsatz gebracht werden und die mögliche Einarbeitung der oben erwähnten Hilfsstoffe beziehungsweise der weiteren Komponenten bei größtmöglicher Produktschonung durchgeführt werden kann.

Am Ende des Extruders wird granuliert. Man erhält gut zu verarbeitende Granulate.

Das nach dem erfindungsgemäßen Verfahren hergestellte TPU kann zu Spritzgießartikeln und zu homogenen Extrusionsartikeln verarbeitet werden.

Die Erfindung soll anhand der nachfolgenden Beispiele näher erläutert werden.

### Beispiele

### TPU-Rezeptur:

| | | |
|---|---|---|
| Polyol 1: | Terathane^{®} 1000 | 52,3 Gew.-Teile |
| Polyol 2: | Exolit^{®} OP 560 | 5,5 Gew.-Teile |
| Kettenverlängerer D): | Butandiol-1,4 | 6,2 Gew.-Teile |
| Isocyanat: | Desmodur^{®} 44 M (MDI) | 35,1 Gew.-Teile |
| Zusätze: | Licowax^{®} C | 0,4 Gew.-Teile |
| | Irganox^{®} 1010 | 0,5 Gew.Teile |
| | Zinndioctoat | 0,011 Gew.Teile |

| | | |
|---|---|---|
| Terathane^{®} 1000 Polyether mit einem Molekulargewicht von Mₙ = 1000 g/mol; Produkt der Firma Du Pont de Nemours Desmodur^{®} 44 M Diphenylmethan-4,4-diisocyanat der Firma Bayer AG Exolit^{®} OP 560 Flammschutzmittel auf Basis Diol-Phosphonat der Firma Clariant GmbH - Molekulargewicht ca. 300 Irganox^{®}1010 Tetrakis(methylen-(3,5-di-tert.-butyl-4-hydroxycinnamate))-methan der Firma Ciba Specialty Chemicals Inc. Licowax^{®} C Ethylen-bis-stearylamid der Firma Clariant | | |

### Beispiel 1 (Vergleich)

### (ZSK-one shot-Verfahren)

Das Polyol 1, in dem Zinndioctoat als Katalysator gelöst waren, wurde auf 200°C erhitzt und mittels einer Zahnradpumpe kontinuierlich in das erste Gehäuse einer ZSK 53 (Zweiwellenextruder der Firma Werner/Pfleiderer) dosiert

In das gleiche Gehäuse wurden das mit dem Butandiol-1,4 vorgemischte Polyol 2 (60°C), 4,4'-Diphenylmethandiisocyanat (Desmodur^{®} 44M) (60°C) und Licowax^{®} C kontinuierlich dosiert.

Die ZSK war auf 220 bis 230°C (Gehäuse 1 bis 8) erhitzt. Die letzten 4 Gehäuse wurden gekühlt. Die Drehzahl der Schnecke betrug 290 U/min.

Am Ende der Schnecke wurde die heiße Schmelze als Strang abgezogen, im Wasserbad gekühlt und granuliert.

### Beispiel 2 (Vergleich)

### (ZSK-Prepolymerdosierverfahren)

Dieser Versuch wurde analog Beispiel 1 durchgeführt, jedoch mit dem Unterschied, dass das Polyol 2 und das Butandiol-1,4 nicht in das Gehäuse 1, sondern in das Gehäuse 7 der ZSK dosiert wurden.

### Beispiel 3 (Vergleich)

### (Zweistufenverfahren)

Dieser Versuch wurde analog zu Beispiel 1 durchgeführt, jedoch mit dem Unterschied, dass das Polyol 1 und das MDI kontinuierlich in einen Statikmischer einer Statikmischerstrecke von 3x DN 20 (SMX der Firma Sulzer) dosiert wurden. Diese Statikmischerstrecke führte direkt in das Gehäuse 1 der ZSK.

### Beispiel 4 (erfindungsgemäß)

### (Mehrstufen-Prepolymerdosierverfahren)

Dieser Versuch wurde analog zu Beispiel 3 durchgeführt. Die kontinuierliche Zugabe und Reaktion von Polyol 2 erfolgte in einem Reaktor, bestehend aus einem DN 18-Statikmischer und einem Rohr (Länge-Durchmesser-Verhältnis : 80). Dieser Reaktor war direkt nach der Statikmischerstrecke aus Beispiel 3 montiert und führte direkt in das Gehäuse 1 der ZSK.

Die Ergebnisse der Produktprüfung sind in der Tabelle angegeben.

### Messung der MVR-Werte (MVR =Melt volume rate)

Der MVR-Wert der Granulate wurde gemäß ISO 1133 mit 10 kg Gewicht gemessen.

### Herstellung der Spritzgießkörper

Das jeweilige TPU-Granulat aus den Beispielen 1 bis - 4 wurde in einer Spritzgießmaschine D 60 (32er Schnecke der Firma Mannesmann) aufgeschmolzen (Massetemperatur ca. 230°C) und zu Platten geformt (125 mm x 50 mm x 2 mm).

### Schlauchextrusion

Das jeweilige TPU-Granulat aus den Beispielen 3 und 4 wurde in einem Einwellen-Extruder 30/25D (Plasticorder PL 2000-6 der Firma Brabender) aufgeschmolzen (Dosierung 3 kg/h; 230 bis 195°C) und durch einen Schlauchkopf zu einem Schlauch extrudiert.

### Mechanische Prüfung bei Raumtemperatur

Der Modul bei 100 % Dehnung und die Reißfestigkeit wurden an den Spritzgießprüfkörpem nach DIN 53 405 gemessen.

### Ermittlung der Flammschutzeigenschaften:

Die Flammschutzeigenschaften wurden gemäß UL94 V bei einer Dicke des Prüfkörpers von 3 mm ermittelt (beschrieben in Underwriters Laboratories Inc. Standard of Safety, "Test for Flammability of Plastic Materials for Parts in Devices and Appliances", S14 ff, Northbrook 1998 und J. Triotzsch, "International Plastics Flammability Handbook", S 346 ff, Hanser Verlag, München 1990).

In diesem Test bedeutet eine V 0-Bewertung ein-nicht brennendes Abtropfen. Ein Produkt mit dieser Bewertung wird deshalb als flammwidrig bezeichnet. Eine V 2-Bewertung bedeutet ein brennendes Abtropfen, d.h. fehlende Flammwidrigkeit.

### Ergebnisse:

| **Beispiel** | **Reaktor: Statikmischer Extruder** | **Dosierung Polyol 1** | **Dosierung Polyol 2** | **Dosierung Kettenverlängerer D** | **Dosierung MDI** | **Granulat** | **MVR 200°C 10kg** | **100 % -Modul [MPa]** | **Reißfestigkeit [MPa]** | **UL 94-Test (3 mm)** | **Schlauch-Extrusion** |
|---|---|---|---|---|---|---|---|---|---|---|---|
| 1* | ZSK 53 | Geh.1-ZSK | Geh.1-ZSK | Geh.1-ZSK | Geh.1-ZSK | klebt | 20 | 6,7 | 39 | V 2 | |
| 2* | ZSK 53 | Geh.1-ZSK | Geh.7-ZSK | Geh.7-ZSK | Geh.1-ZSK | klebt stark; nicht zu verarbeiten | 42 | | | | |
| 3* | 3xDN20/ ZSK 53 | 1. DN20 | Geh.1-ZSK | Geh.1-ZSK | 1. DN20 | klebt | 25 | 6,2 | 47 | V 0 | inhomogenes Extrudat |
| 4 | 3xDN20/ 1xDN18 / Rohr / ZSK 53 | 1. DN20 | 1. DN18 | Geh.1-ZSK | 1. DN20 | klebt nicht gut granulierfähig | 7 | 6,7 | 48 | V 0 | homogenes Extrudat |

| | | | | | | | | | | | |
|---|---|---|---|---|---|---|---|---|---|---|---|
| * nicht erfindungsgemäßes Vergleichsbeispiel Geh. = Gehäuse ZSK 53 = (Zweiwellenkneter der Firma Werner/Pfleiderer) 3 x DN 20 = Statikmischerstrecke aus drei DN 20 Statikmischern der Firma Sulzer 1 x DN 18 = ein Statikmischer DN 18 der Firma Sulzer | | | | | | | | | | | |

Die TPU-Granulate die nach dem one-Shot-Verfahren (Beispiel 1) hergestellt wurden, waren klebrig und erreichten im Flammtest nur V2-Bewertung Die Klebrigkeit von Granulaten erschwert deren weitere Verarbeitung und deren Handlung (Fördern, Umfüllen usw.).

Die nach dem ZSK-PrepolymerVerfahren hergestellten Produkte waren so stark klebrig, dass sie nicht zu verarbeiten waren (Beispiel 2).

Die nach dem Zweistufen-Prepolymer-Verfahren (Beispiel 3) hergestellten TPU-Produkte waren auch klebrig. Bei der Verarbeitung wurden inhomogene Extrusionsschläuche erhalten.

Die nach dem erfindungsgemäßen Mehrstufenverfahren (Beispiel 4) hergestellten Granulate waren dagegen nicht klebrig und ließen sich sehr gut zu TPU-Artikeln (z.B. Extrusionsschläuchen) mit ausgezeichneten TPU-Eigenschaften verarbeiten.

## Patentansprüche

1. Mehrstufiges Verfahren zur kontinuierlichen Herstellung thermoplastisch verarbeitbarer Polyurethanelastomere (TPU) mit Zugfestigkeiten von >30 MPa (gemessen nach EN ISO 527-3), **dadurch gekennzeichnet, dass**
a) ein Prepolymer I durch Umsetzung von
A) wenigstens einem organischen Diisocyanat mit
B) einem Polyol 1 mit im Mittel mindestens 1,8 und höchstens 3,0 zerewitinoffaktiven Wasserstoffatomen und einem zahlenmittleren Molekulargewicht M̅ₙ von 450 bis 10000 hergestellt wird,
b) das unter a) hergestellte Prepolymer I mit
C) einem Polyol 2 , das von Polyol 1 verschieden ist, mit im Mittel mindestens 1,8 und höchstens 3,0 zerewitinoffaktiven Wasserstoffatomen und einem zahlenmittlerenMolekulargewicht M̅ₙ von 60 bis 10000 zu einem Prepolymer II umgesetzt wird , wobei unter Hinzuziehung der Reaktionskomponenten (A) und (B) und (C) ein Äquivalenzverhältnis von NCO-Gruppen zur Summe der NCO-Reaktiven Gruppen von 1,2:1 bis 10:1 eingestellt wird,
c) das unter b) hergestellte Prepolymer II mit
D) mindestens einem niedermolekularen Polyol oder Polyamin mit im Mittel mindestens 1,8 und höchstens 3,0 zerewitinoffaktiven Wasserstoffatomen und einem zahlenmittleren Molekulargewicht M̅ₙ von 60 bis 400-als Kettenverlängerer in einem mit hoher Scherenergie arbeitenden Hochviskosreaktor vollständig umgesetzt wird,
wobei die Schritte a) bis c) gegebenenfalls in Gegenwart von Katalysatoren F) und gegebenenfalls unter Zugabe von 0 bis 20 Gew.-%, bezogen auf die Gesamtmenge TPU, weiterer Hilfs- und Zusatzstoffe E) durchgeführt werden,
wobei insgesamt unter Hinzuziehung sämtlicher Reaktionskomponenten der Stufen a) bis c) ein Äquivalenzverhältnis von NCO-Gruppen zur Summe der NCO-reaktiven Gruppen von 0,9:1 bis 1,2:1 eingestellt wird.

2. Verfahren zur kontinuierlichen Herstellung thermoplastisch verarbeitbarer Polyurethanelastomere gemäß Anspruch 1, **dadurch gekennzeichnet, dass** die zerewitinoffaktive Wasserstoffatome enthaltenden Polyole 1 und 2 Polyesterpolyole, Polyetherpolyole, Polycarbonatpolyole oder Polyole, die Stickstoff-, Phosphor-, Schwefel- oder Siliziumatome enthalten, oder Gemische aus diesen sind.

3. Verfahren zur kontinuierlichen Herstellung thermoplastisch verarbeitbarer Polyurethanelastomere gemäß Anspruch 1, **dadurch gekennzeichnet, dass** die zerewitinoffaktive Wasserstoffatome enthaltenden niedermolekularen Polyole in D) Ethylenglykol, Butandiol, Hexandiol, 1,4-Di-(β-hydroxyethyl)-chinon und/oder 1,4-Di-(β-hydroxyethyl)-bisphenol A sind.

4. Verfahren zur kontinuierlichen Herstellung thermoplastisch verarbeitbarer Polyurethanelastomere gemäß Anspruch 1, **dadurch gekennzeichnet, dass** das organische Diisocyanat A) ein aromatisches Diisocyanat, insbesondere ein Diphenylmethandiisocyanat-Isomerengemisch mit einem 4,4'-Diphenylmethandiisocyanatgehalt von >96 Gew.-% ist.

5. Verfahren zur kontinuierlichen Herstellung thermoplastisch verarbeitbarer Polyurethanelastomere gemäß Anspruch 1, **dadurch gekennzeichnet, dass** das zerewitinoffaktive Wasserstoffatome enthaltende Polyol 2 eine organische phosphorhaltige Verbindung, mit im Mittel mindestens 1,5 und höchstens 2,5 zerewitinoffaktive Wasserstoffatomen und mit einem zahlenmittleren Molekulargewicht M̅ₙ von 100 bis 5000 in einer Menge von 0,01 bis 50 Gew.-%, bezogen auf die Gesamtmenge an TPU, ist.

6. Verfahren zur kontinuierlichen Herstellung thermoplastisch verarbeitbarer Polyurethanelastomere gemäß Anspruch 1, **dadurch gekennzeichnet, dass** die Stufen a) und b) in getrennten Reaktoren durchgeführt werden.

7. Verfahren zur kontinuierlichen Herstellung thermoplastisch verarbeitbarer Polyurethanelastomere gemäß Anspruch 1, **dadurch gekennzeichnet, dass** die Reaktionsstufe c) in einem von a) und b) verschiedenen Reaktor durchgeführt wird.

8. Verfahren zur kontinuierlichen Herstellung thermoplastisch verarbeitbarer Polyurethanelastomere gemäß Anspruch 1, **dadurch gekennzeichnet, dass** die Stufe c) in einem Mehrwellenextruder durchgeführt wird.

9. Verwendung der nach dem Verfahren gemäß den Ansprüchen 1 bis 8 hergestellten thermoplastischen verarbeitbaren Polyurethanelastomeren zur Herstellung von Spritzgießartikeln und Extrusionsartikeln.

## Claims

1. Multi-stage process for the continuous preparation of thermoplastically processable polyurethane elastomers (TPU) with tensile strengths of > 30 MPa (measured in accordance with EN ISO 527-3), **characterized in that**
a) a prepolymer I is prepared by reaction of
A) at least one organic diisocyanate with
B) a polyol 1 having on average at least 1.8 and not more than 3.0 Zerewitinoff-active hydrogen atoms and a number-average molecular weight M̅ₙ of 450 to 10,000,
b) the prepolymer I prepared under a) is reacted with
C) a polyol 2, which differs from polyol 1, having on average at least 1.8 and not more than 3.0 Zerewitinoff-active hydrogen atoms and a number-average molecular weight Mₙ of 60 to 10,000, to give a prepolymer II, by adding together the reaction components (A) and (B) and (C) an equivalence ratio of NCO groups to the sum of NCO-reactive groups of 1.2:1 to 10:1 being established,
c) the prepolymer II prepared under b) is reacted completely with
D) at least one low molecular weight polyol or polyamine having on average at least 1.8 and not more than 3.0 Zerewitinoff-active hydrogen atoms and a number-average molecular weight M̅ₙ of 60 to 400 as a chain lengthener, in a high-viscosity reactor which operates with a high shear energy,
steps a) to c) optionally being carried out in the presence of catalysts F) and optionally with the addition of 0 to 20 wt.%, based on the total amount of TPU, of further auxiliary substances and additives E), by adding together all the reaction components of stages a) to c) an equivalence ratio of NCO groups to the sum of NCO-reactive groups of 0.9:1 to 1.2:1 being established overall.

2. Process for the continuous preparation of thermoplastically processable polyurethane elastomers according to claim 1, **characterized in that** polyols 1 and 2 containing Zerewitinoff-active hydrogen atoms are polyester-polyols, polyether-polyols, polycarbonate-polyols or polyols which contain nitrogen, phosphorus, sulfur or silicon atoms, or mixtures of these.

3. Process for the continuous preparation of thermoplastically processable polyurethane elastomers according to claim 1, **characterized in that** the low molecular weight polyols containing Zerewitinoff-active hydrogen atoms in D) are ethylene glycol, butanediol, hexanediol, 1,4-di-(β-hydroxyethyl)-hydroquinone and/or 1,4-di-(β-hydroxyethyl)-bisphenol A.

4. Process for the continuous preparation of thermoplastically processable polyurethane elastomers according to claim 1, **characterized in that** the organic diisocyanate A) is an aromatic diisocyanate, in particular a diphenylmethane-diisocyanate isomer mixture with a 4,4'-diphenylmethane-diisocyanate content of > 96 wt.%.

5. Process for the continuous preparation of thermoplastically processable polyurethane elastomers according to claim 1, **characterized in that** polyol 2 containing Zerewitinoff-active hydrogen atoms is an organic phosphorus-containing compound having on average at least 1.5 and not more than 2.5 Zerewitinoff-active hydrogen atoms and having a number-average molecular weight M̅ₙ of 100 to 5,000, in an amount of 0.01 to 50 wt.%, based on the total amount of TPU.

6. Process for the continuous preparation of thermoplastically processable polyurethane elastomers according to claim 1, **characterized in that** stages a) and b) are carried out in separate reactors.

7. Process for the continuous preparation of thermoplastically processable polyurethane elastomers according to claim 1, **characterized in that** reaction stage c) is carried out in a reactor which differs from a) and b).

8. Process for the continuous preparation of thermoplastically processable polyurethane elastomers according to claim 1, **characterized in that** stage c) is carried out in a multi-screw extruder.

9. Use of the thermoplastically processable polyurethane elastomers prepared by the process according to claims 1 to 8 for the production of injection-moulded articles and extruded articles.

## Revendications

1. Procédé à plusieurs stades opératoires pour la préparation continue d'élastomères de polyuréthannes aptes au travail thermoplastique (EPT) ayant des résistances à la traction supérieures à 30 MPa (mesure selon la norme EN ISO 527-3), **caractérisé en ce que**
a) on prépare un prépolymère I par réaction de
A) au moins un diisocyanate organique avec
B) un polyol 1 contenant en moyenne au moins 1,8 et au maximum 3,0 atomes d'hydrogène actif selon Zerewitinoff et ayant un poids moléculaire moyen, moyenne en nombre, M̅ₙ de 450 à 10 000,
b) on fait réagir le prépolymère I préparé en a) ci-dessus avec
C) un polyol 2, différent du polyol 1, qui contient en moyenne au moins 1,8 et au maximum 3,0 atomes d'hydrogène actif selon Zerewitinoff et a un poids moléculaire moyen, moyenne en nombre, M̅ₙ de 60 à 10 000, avec formation d'un prépolymère II, en réglant, pour ce qui concerne les composants réactifs (A), (B) et (C), à un rapport de 1,2:1 à 10:1 entre les équivalents de groupes NCO et la somme des équivalents de groupes réactifs avec les groupes NCO,
c) on fait réagir complètement le prépolymère II préparé en b) ci-dessus avec
D) au moins un polyol ou une polyamine à bas poids moléculaire contenant en moyenne au moins 1,8 et au maximum 3,0 atomes d'hydrogène actif selon Zerewitinoff et ayant un poids moléculaire moyen, moyenne en nombre, M̅ₙ de 60 à 400, qui sert d'agent d'allongement des chaînes, dans un réacteur supportant les fortes viscosités et opérant avec une forte énergie de cisaillement,
les opérations a) à c) étant réalisées le cas échéant en présence de catalyseurs (F) et le cas échéant avec adjonction de 0 à 20 % en poids, par rapport à la quantité totale d'EPT, d'autres produits auxiliaires et
additifs E), en réglant au total, pour ce qui concerne tous les composants réactifs des stades opératoires a) à c), à un rapport de 0,9:1 à 1,2:1 entre les équivalents de groupes NCO et la somme des équivalents de groupes réactifs avec les groupes NCO.

2. Procédé pour la préparation continue d'élastomères de polyuréthannes aptes au travail thermoplastique selon la revendication 1, **caractérisé en ce que** les polyols 1 et 2 contenant des atomes d'hydrogène actif selon Zerewitinoff sont des polyester-polyols, des polyéther-polyols, des polycarbonate-polyols ou des polyols contenant des atomes d'azote, de phosphore, de soufre ou de silicium, ou des mélanges de ceux-ci.

3. Procédé pour la préparation continue d'élastomères de polyuréthannes aptes au travail thermoplastique selon la revendication 1, **caractérisé en ce que** les polyols à bas poids moléculaire contenant des atome d'hydrogène actif selon Zerewitinoff de D) sont l'éthylèneglycol, le butanediol, l'hexanediol, la 1,4-di-(β-hydroxyéthyl)-hydroquinone ou le 1,4-di-(β-hydroxyéthyl)-bisphénol A.

4. Procédé pour la préparation continue d'élastomères de polyuréthannes aptes au travail thermoplastique selon la revendication 1, **caractérisé en ce que** le diisocyanate organique A) est un diisocyanate aromatique, en particulier un mélange d'isomères du diphénylméthanediisocyanate à une teneur en 4,4'-diphénylméthanediisocyanate supérieure à 96 % en poids.

5. Procédé pour la préparation continue d'élastomères de polyuréthannes aptes au travail thermoplastique selon la revendication 1, **caractérisé en ce que** le polyol 2 contenant des atomes d'hydrogène actif selon Zerewitinoff est un composé organique phosphoré contenant en moyenne au moins 1,5 et au maximum 2,5 atomes d'hydrogène actif selon Zerewitinoff et ayant un poids moléculaire moyen, moyenne en nombre, M̅ₙ de 100 à 5000, en quantité de 0,01 à 50 % en poids par rapport à la quantité totale d'EPT.

6. Procédé pour la préparation continue d'élastomères de polyuréthannes aptes au travail thermoplastique selon la revendication 1, **caractérisé en ce que** les stades opératoires a) et b) sont réalisés dans des réacteurs séparés.

7. Procédé pour la préparation continue d'élastomères de polyuréthannes aptes au travail thermoplastique selon la revendication 1, **caractérisé en ce que** le stade de réaction c) est réalisé dans un réacteur différent de ceux utilisés en a) et b).

8. Procédé pour la préparation continue d'élastomères de polyuréthannes aptes au travail thermoplastique selon la revendication 1, **caractérisé en ce que** le stade opératoire c) est réalisé dans une extrudeuse à plusieurs vis.

9. Utilisation des élastomères de polyuréthannes aptes au travail thermoplastique préparés par le procédé selon les revendications 1 à 8 pour la fabrication d'articles moulés par injection et d'articles extrudés.
